Europäisches Patentamt

European Patent Office

Office européen des brevets

(11) Veröffentlichungsnummer: **0 340 301 B1**

(12) **EUROPÄISCHE PATENTSCHRIFT**

(45) Veröffentlichungstag der Patentschrift: **16.06.93**

(21) Anmeldenummer: **89901959.0**

(22) Anmeldetag: **06.10.88**

(86) Internationale Anmeldenummer:
**PCT/DE88/00618**

(87) Internationale Veröffentlichungsnummer:
**WO 89/03574 (20.04.89 89/09)**

(51) Int. Cl.⁵: **G10L 7/06**

(54) **DIGITALES ADAPTIVES TRANSFORMATIONSCODIERVERFAHREN.**

(30) Priorität: **06.10.87 DE 3733786**
**06.10.87 DE 3733772**

(43) Veröffentlichungstag der Anmeldung:
**08.11.89 Patentblatt 89/45**

(45) Bekanntmachung des Hinweises auf die
Patenterteilung:
**16.06.93 Patentblatt 93/24**

(84) Benannte Vertragsstaaten:
**AT BE CH DE FR GB IT LI LU NL SE**

(56) Entgegenhaltungen:
**WO-A-81/01066**
**WO-A-86/03873**
**WO-A-88/01811**
**US-A- 4 322 793**
**US-A- 4 570 220**

(73) Patentinhaber: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **EBERLEIN, Ernst**
**Hollerweg 5**
**W-8520 Erlangen(DE)**
Erfinder: **GERHÄUSER, Heinz**
**Saugendorf 17**
**W-8551 Waischenfeld(DE)**
Erfinder: **POPP, Harald**
**Obermichelbacherstrasse 18**
**W-8520 Erlangen(DE)**
Erfinder: **SEITZER, Dieter**
**Hunboldstrasse 14**
**W-8520 Erlangen(DE)**
Erfinder: **SCHOTT, Hartmut**
**Harfenstrasse 8b**
**W-8520 Erlangen(DE)**

ICASSP 82,IEEE International Conference on Acoustics,Speech and Signal Processing, 3-5. May 1987, Paris; volume 3, IEEE, (New York, US) G.J. Bosscha et al.:"DFT-vocoder using harmonic-sieve pitch extraction", pages 1952-1955, paragraph 2.2: "Approximation of the spectral envelope"; paragraph 2.3 "Coding"

ICASSP 86, IEEE-IECEJ-ASJ International Conference of Acoustics, Speech, and Signal Processing, 7-11. April 1986, Tokyo, JP, VOLUME 4, ieee (NEW YORK, US) B. Mazor et al.: "Adaptive subbands excited transform (ASET) coding", pages 3075-3078, see page 3076, left-hand column, lines 5-32

Erfinder: **BRANDENBURG, Karl-Heinz**
**Am Europakanal 40**
**W-8520 Erlangen(DE)**

(74) Vertreter: **Münich, Wilhelm, Dr. et al**
**Kanzlei Münich, Steinmann, Schiller**
**Wilhelm-Mayr-Str. 11**
**W-8000 München 21 (DE)**

## Beschreibung

### Technisches Gebiet

Die Erfindung bezieht sich auf ein digitales adaptives Transformationscodierverfahren für die Übertragung und/oder Speicherung von akustischen Signalen und insbesondere von Musiksignalen gemäß dem Oberbegriff des Patentanspruchs 1.

### Stand der Technik

Akustische Signale werden gegenwärtig in der Regel mittels der sogenannten Pulscodemodulation codiert. Bei diesem Verfahren werden Musiksignale mit mindestens 32 kHz, normalerweise mit 44,1 kHz abgetastet. Bei 16 Bit linearer Codierung ergeben sich damit Datenraten zwischen 512 und 705,6 kbit/s.

Es sind deshalb in der Vergangenheit die verschiedensten Verfahren zur Reduktion dieser Datenmengen vorgeschlagen worden: Ein Verfahren gemäß dem Oberbegriff des Patentanspruchs 1 ist aus der Literaturstelle "DFT Vocoder using harmonic-sieve pitch extraction" von G.J.Bosscha et al. in ICASSP 82 bekannt.

Beispielsweise ist in der DE-PS 33 10 480 ein digitales adaptives Transformationscodierverfahren gemäß dem Oberbegriff des Patentanspruchs 1 beschrieben worden. Auf diese Druckschrift wird im übrigen hinsichtlich aller nicht näher beschriebenen Einzelheiten ausdrücklich bezug genommen.

Die adaptive Transformationscodierung erlaubt bei guter Qualität Datenreduktionen auf ca. 110 kbit/s. Nachteilig bei diesen bekannten Verfahren ist jedoch, daß insbesondere bei kritischen Musikstücken subjektiv wahrnehmbare Qualitätsminderungen auftreten können. Dies kann unter anderem eine Folge davon sein, daß bei den bekannten Verfahren Störanteile im codierten Signal nicht an die Hörschwelle des Ohres angepaßt werden können und darüberhinaus Übersteuerungen und zu grobe Quantisierungen möglich sind.

Darüberhinaus ist noch keine Echtzeit-Realisierung der adaptiven Transformationscodierung bekannt. Dies liegt zum einen an der Komplexität der bekannten Verfahren, zum anderen aber auch an den bekannten Multi-Signalprozessorsystemen, die derartige Verfahren abarbeiten sollen.

Derartige Multi-Signalprozessorsysteme werden beispielsweise bei der Verarbeitung und insbesondere der Datenreduktion von digitalen Musiksignalen, aber auch in vielen anderen Einsatzgebieten, wie der Radartechnik, der Mustererkennung etc. benötigt.

Bekannte Multi-Signalprozessorsysteme sind so aufgebaut, daß der Datenfluß zwischen den einzelnen Signalverarbeitungsmodulen fest verdrahtet oder mittels eines Programms gesteuert wird. In jedem Falle ist bei solchen Systemen der Datenfluß schwer zu ändern oder erreicht keine ausreichend hohen Durchsatzraten, wie sie für die digitale Signalverarbeitung im Audiobereich benötigt werden. Eine optionale Anpassung an die jeweilige Aufgabe erfordert in der Regel eine Änderung der Hardware des Systems oder aufwendige Kommunikationsstrukturen, wie beispielsweise Kreuzschienenverteiler.

Die Adaption an Parameter, die nicht direkt aus dem eigentlichen Signal ableitbar ist, ist nicht oder nur mit erheblicher Einflußnahme auf den normalen Programmablauf möglich. Die Adaption unter Echtzeitbedingungen ist damit meistens ausgeschlossen.

Darüberhinaus ist die Programmentwicklung auf solchen Systemen aufwendig und erfordert in der Regel zusätzliche Einrichtungen.

### Darstellung der Erfindung

Der Erfindung liegt die Aufgabe zugrunde, ein digitales adaptives Transformationscodierverfahren gemäß dem Oberbegriff des Patentanspruchs 1 derart weiterzubilden, daß Übersteuerungen nicht mehr auftreten können und darüberhinaus eine Echtzeit-Realisierung möglich ist.

Zur Realisierung des erfindungsgemäßen Verfahrens in Echtzeit soll ferner ein Multi-Signalprozessorsystem gemäß dem Oberbegriff des Patentanspruchs 5 derart weitergebildet werden, daß eine leichte Anpassung an die jeweilige Problemstellung und eine schnelle Datenverarbeitung in Echtzeit möglich wird.

Eine erfindungsgemäße Lösung dieser Aufgabe ist mit ihren Weiterbildungen in den Patentansprüchen gekennzeichnet.

Bei dem erfindungsgemäßen Verfahren wird zur Beschreibung des Grobverlaufs des Spektrums der quantisierte Maximalwert jeder Frequenzgruppe verwendet und allen Werten einer Frequenzgruppe die gleiche Bitzahl entsprechend dem in dieser Frequenzgruppe auftretenden Maximalwert zugeteilt. Eine weitere Verbesserung der Codierung ergibt sich durch die Aufteilung der Spektralwerte in Frequenzgruppen

EP 0 340 301 B1

unter psychoakustischen Gesichtspunkten. Dabei ist bei niedrigen Frequenzen die Bandbreite geringer, so daß bei gleicher subjektiver Qualität der Codierung weniger Frequenzbänder als bei gleichmäßiger Aufteilung verwendet werden müssen.

Durch die Zuteilung einer Mindestbitzahl zu jeder Frequenzgruppe, wobei die Mindestbitzahl entsprechend psychoakustischen Gesetzmäßigkeiten festgelegt wird, wird sichergestellt, daß das "Quantisierungsgeräusch" vom gewünschten Signal maskiert wird.

Diese erfindungsgemäße Ausbildung hat eine Reihe von Vorteilen:

Im Vergleich zu der bekannten adaptiven Transformationscodierung entfällt die Interpolation der Spektumsstützwerte, so daß sich eine erhebliche Einsparung an Rechenzeit ergibt. Darüberhinaus ist jede Einzelberechnung für jede Frequenzgruppe nur eimal durchzuführen. Dies bedeutet, daß bei 512 Werten im Spektrum, die in 46 Frequenzgruppen aufgeteilt sind (typische Werte), lediglich 46 Berechnungen durchzuführen sind, während bei dem bekannten Verfahren die Bitzuteilung für jeden Spektralwert einzeln erfolgt, also 512 Einzelschritte durchzuführen sind.

Überraschenderweise ist festgestellt worden, daß trotz dieser "groben Bitzuteilung" die Datenrate gegenüber der bekannten adaptiven Transformationscodierung lediglich geringfügig, typischerweise auf "3,5" Bit pro Abtastwert ansteigt.

Ein weiterer Vorteil gegenüber der bekannten adaptiven Transformationscodierung ist, daß Übersteuerungen etc. nicht mehr auftreten, da der Grobverlauf des Spektrums durch den quantisierten Maximalwert jeder Frequenzgruppe beschrieben wird.

Weiterbildungen der Erfindung sind in den Unteransprüchen gekennzeichnet:

Selbstverständlich ist es möglich, in bekannter Weise zu quantisieren, beispielsweise logarithmisch oder mittels eines Max-Quantisierers.

Durch die erfindungsgemäß vorgenommene Bildung der "Einhüllenden" ist jedoch eine erheblich vereinfachte Berechnung mittels einer linearen Quantisierung möglich. Da nur endlich viele bekannte Quantisierungsstufen vorkommen, kann die in der linearen Quantisierung sonst nötige Division, die mittels Signalprozessoren nur zeitaufwendig zu realisieren ist, durch eine Multiplikation mit Tabellenzugriff ersetzt werden (Ansprüche 2 und 3). Dies vereinfacht den Aufbau eines Multi-Signalprozessorsystems, das eine Echtzeitrealisierung erlaubt, wesentlich.

Zur weiteren Verringerung der Rechenzeit für die Bitzuteilung können die "übriggebliebenen" bzw. "fehlenden Bits" nicht in einem iterativen Algorithmus wie bei den bekannten Verfahren verteilt werden, vielmehr werden erfindungsgemäß zu viele bzw. fehlende Bits von hohen Frequenzen her kommend an der nächstmöglichen Stelle zugeteilt. Die Verteilung wird hierdurch zwar suboptimal, dafür sinkt der maximal nötige Rechenaufwand aber beträchtlich.

Für das erfindungsgemäße Verfahren können im Prinzip beliebige Transformationsverfahren, wie beispielsweise die diskrete Fouriertransformation (DFT), die diskrete Cosinustransformation (DCT) oder die sogenannte TDAC-Transformation verwendet werden. Zur TDAC-Transtormation, die gerade bei dem erfindungsgemäßen Verfahren eine Reihe von Vorteilen bringt, wird auf den Artikel Subband/Transform Coding Using Filter Bank Designs Based on Time Domain Aliasing Cancellation von J.P. Princen, A.W. Johnson und A.B. Bradley verwiesen.

Die Rücktransformation der codierten Werte kann selbstverständlich in entsprechend umgekehrter weise durchgeführt werden.

Bei dem Signalprozessorsystem gemäß Anspruch 5 ist deshalb zusätzlich wenigstens ein globaler Kommunikationskanal vorhanden, über den eine flexible Datenkommunikation, eine Systembeobachtung, Systemsteuerung und/oder Adaption erfolgt. Da der lokale Kommunikationskanal den Datenverkehr zwischen Nachbarmodulen abwickelt, kann der zusätzliche globale Kommunikationskanal weniger aufwendig gestaltet werden. Dennoch erlaubt es der zusätzliche Kommunikationskanal, daß der Datenfluß ohne Schaltungsänderung geändert werden kann, eine Adaption ohne Einflußnahme auf das Programm möglich ist, und die Programentwicklung erleichtert wird.

Das erfindungsgemäße Multi-Signalprozessorsystem unterstützt damit viele Parallelarbeitskonzepte, beispielsweise die Datenreduktion von Audiosignalen, aber auch andere digitale Signalverarbeitungsprobleme.

Im Anspruch 6 ist angegeben, daß zwei globale Kommunikationskanäle vorhanden sind. Diese Ausbildung hat den Vorteil, daß das schnelle Kcmmunikationssignal immer dann, wenn Rekursionen benötigt werden oder sich der langsame globale und der lokale Kommunikationskanal gegenseitig beeinflussen, alle noch benötigten Datenpfade bereitstellt.

Darüberhinaus ist es bei der im Anspruch 7 beanspruchten Weiterbildung möglich, daß der schnelle globale Kommunikationskanal einen wahlfreien Datenaustausch, der beispielsweise durch einen als Vermittlungsknoten ausgebildeten Kommunikationscontroller (Anspruch 8) realisiert wird, ermöglicht. Dabei ist

4

insbesondere eine dynamische Datenpfadverteilung möglich, die daten- und/oder algorithmusabhängig sein kann (Anspruch 9.).

Darüberhinaus ist eine Umverteilung der Verbindungen nach bestimmten Kriterien möglich, beispielsweise können die Verbindungen zyklisch umgeschaltet werden.

**Kurze Beschreibung der Zeichnung**

Die Erfindung wird nachstehend anhand von Ausführungsbeispielen unter Bezugnahme auf die Zeichnung näher beschrieben, in der zeigen:

Fig. 1  ein Ablaufdiagramm eines erfindungsgemäßen Codierverfahrens, und
Fig. 2  ein Ablaufdiagramm eines erfindungsgemäßen Decodierverfahrens,
Fig. 3  ein Blockschaltbild eines erfindungsgemäßen Multi-Signalprozessorsystems, und
Fig. 4  den Aufbau eines Moduls.

**Darstellung von Ausführungsbeispielen**

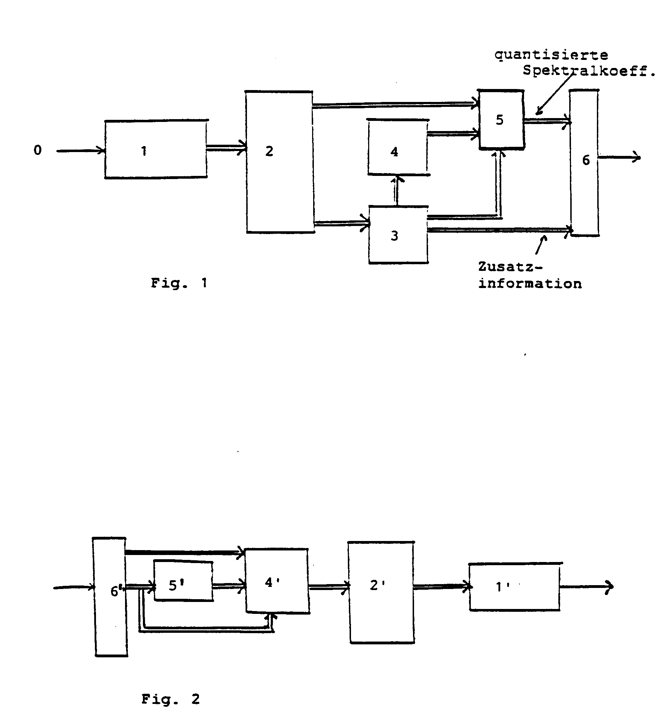

Fig. 1 zeigt in einem "Blockdiagramm" die einzelnen Schritte eines Ausführungsbeispiels für ein erfindungsgemäßes Codierverfahren.

Im ersten Verfahrensschritt 1 wird der (digitale) Datenstrom mit hoher Datenrate in einem Eingangspuffer gepuffert und "gefenstert". In diesem Schritt kann ferner eine Pegelsteuerung erfolgen. Dieser Schritt läuft im wesentlichen wie bei anderen Codierverfahren ab.

Im nächsten Schritt 2 erfolgt die Transformation von N reellen Eingangswerten in den Spektralbereich; hierzu kann beispielsweise die diskrete Fouriertransformation (realisiert mit FF-Transformation), die Cosinustransformation oder die TDAC-Transformation (DCT mit Auslöschung von Alias-Komponenten) verwendet werden. Dabei kann in üblicher Weise eine Reduktion der Koeffizienten, die auch als Dichtespeicherung bezeichnet wird, erfolgen.

In dem dritten Schritt 3 werden die Spektralkoeffizienten in unterschiedlich breite Gruppen (Frequenzgruppen) entsprechend der "Empfindlichkeitskurve" des menschlichen Gehörs aufgeteilt. Bei niedrigen Frequenzen ist die Bandbreite geringer. Damit können bei gleicher subjektiver Qualität der Codierung weniger Frequenzbänder verwendet werden als bei gleichmäßiger Aufteilung.

Zur Beschreibung des Grobverlaufs eines Frequenzbandes durch eine "Einhüllende" wird die maximale Amplitude berechnet und logarithmisch quantisiert. Diese Werte werden als Zusatzinformation zum Empfänger übertragen.

Diese erfindungsgemäße Bildung der "quantisierten logarithmischen Einhüllenden" trägt wesentlich dazu bei, die bei dem herkömmlichen ATC-Verfahren auftretenden Fehler, die beispielsweise durch "Übersteuerung" hervorgerufen werden, zu vermeiden.

Darüberhinaus ergibt sich ein erheblicher Gewinn an Rechenzeit, da die Berechnung der beim Stand der Technik gebildeten Kennwerte für das Spektrum bzw. der interpolierten Spektrumsstützwerte wegfällt.

Im vierten Schritt 4 erfolgt die Bitzuteilung. Die Bitzuteilung erfolgt nach derselben Formel wie bei der bekannten ATC. Die Bitzuteilung erfolgt jedoch nicht einzeln für jeden Spektralwert, sondern die Spektralwerte eines Frequenzbandes erhalten alle die gleiche Bitzahl zugeteilt. Die Berechnung muß damit nicht mehr für beispielsweise 512 Spektralwerte einzeln, sondern nur noch für beispielsweise 46 Frequenzgruppen erfolgen.

Zur Berücksichtigung physioakustischer Gesetzmäßigkeiten wird ferner jeder Frequenzgruppe eine angepaßte Mindestbitzahl zugeteilt, so daß sichergestellt ist, daß das Quantisierungsgeräusch vom Nutzsignal maskiert (verdeckt) wird.

Eine weitere Verringerung der Rechenzeit kann dadurch erreicht werden, daß "fehlende" oder "übriggebliebene" Bits nicht in einem iterativen Algorithmus wie beim Stand der Technik, sondern von hohen Frequenzen her kommend an der nächsten möglichen Stelle zugeteilt werden. Die Verteilung ist hierdurch zwar nicht optimal, eine subjektive Verschlechterung des Codierungsergebnisses ist aber nicht feststellbar und die Rechenzeit wird erheblich verkürzt.

Im Schritt 5 erfolgt die Quantisierung. Durch die erfindungsgemäße Bildung der "Einhüllenden" ist eine erheblich vereinfachte Quantisierung mittels eines linearen Quantisierers möglich. Aus der quantisierten logarithmierten maximalen Amplitude eines Frequenzbandes kann z.B. durch Tabellenzugriff sehr einfach eine obere Schranke für die Spektralwerte dieses Frequenzbandes bestimmt werden.

Da nur endlich viele bekannte Quantisierungsstufen vorkommen, kann die in der linearen Quantisierung eigentlich erforderliche Division, die hardwaremäßig aufwendig zu realisieren ist, durch eine einfach zu realisierende Multiplikation ersetzt werden.

Die Quantisierungsstufe ergibt sich als

$$qstep = fmax / nsteps; \quad nsteps = 2^{ibit} - 1$$

hierbei ist fmax die obere Schranke, ibit die zugeteilte Bitzahl und nsteps die Zahl der Betragsstufen des Quantisierers.

Der quantisierte Wert iqx ist dann:

$$iqx = x / qstep$$

hierbei ist x der zu quantisierende Spektralkoeffizient.

Durch Abspeicherung in Tabellen kann diese Rechnung mittels Multiplikation und Speicheroperationen (Tabellenzugriff) durchgeführt werden, so daß die Berechnung erheblich vereinfacht wird.

Ein erheblicher Vorteil gegenüber dem Stand der Technik ergibt sich ferner dadurch, daß ausgehend von einer bekannten oberen Schranke quantisiert wird, so daß keine "Übersteuerung" des Quantisierers möglich ist.

Im Schritt 6 wird schließlich in einem "Multiplexer" ein serieller Bitstrom erzeugt, der übertragen oder gespeichert werden kann.

Die in Fig. 2 dargestellte Decodierung erfolgt entsprechend "umgekehrt". Im Schritt 6′ wird demultiplext, anschließend erfolgt die Bitzuteilung (5′), die Rekonstruktion der Spektralwerte als Umkehroperation zum Quantisierer (4′), die Rücktransformation (2′) und anschließend die entsprechende Fensterung in einem Ausgangspuffer (1′).

Im folgenden soll ein numerisches Ausführungsbeispiel erläutert werden. Hierbei ist ohne Beschränkung des allgemeinen Erfindungsgedankens angenommen, daß die Blocklänge M = 8 und die Überlappung 2 ist. Typische Werte für die Blocklänge in der Praxis sind 512 oder 1024.

Ferner sollen die Spektralwerte in drei Frequenzgruppen (FG) aufgeteilt werden und 28 Bit für die Codierung zur Verfügung stehen. Als Transformation ist die DFT gewählt.

Die Eingangswerte sollen sein

```
-4736   -4361    -3350    -1933    -329   -1176    2292     3110
```

Diese Werte stellen ein typisches Musiksignal dar. Nach der Pegelsteuerung erhält man bei dem gewählten Ausführungsbeispiel:

```
-9472   -8722   -6700   -3866    -658    2352    4584    6220
```

Diese Werte werden mit folgenden Fensterfaktoren

```
,5      ,866   1        1        1       1       ,866    ,5
```

"gefenstert" (Überlappung 2):

```
-4736   -7553,5 -6700    -3866    -659    2352   3969.9   3110
```

Ferner soll folgende Aufteilung in Frequenzgruppen angenommen werden:

```
FG 1:   1 2           FG 2:   3 4           FG 3:   5 6 7
```

Der Spektralkoeffizient 8 wird gelöscht.

6

Der jeweilige log. quantisierte Maximalwert der einzelnen Frequenzgruppen ist:

```
            4978,6                 11303,4                 2222,7


    ifl       50                     54                     45
                     (log. Einhüllende in 6 Bit-Darst.)
    xfl      5792,6                 11585,2                2435,5
```

Die Werte von ifl können mit 6 Bit codiert werden !

Anschließend erfolgt die Bitzuteilung. Hierbei ist zu berücksichtigen, daß die Aufteilung auf 7 Koeffizienten erfolgt, da die höchste Frequenz gelöscht ist.

Da bei diesem Beispiel 28 Bit zur Verfügung stehen sollen, erhält man als mittlere zu verteilende Bitzahl: 4

Berechnung der gemittelten Energie =

$\Sigma$ Einhüllende (log.) * Breite = 343

Damit erhält man als erste Näherung für die Bitzahl

```
    bz(ifl) = mittlere Bitzahl +
                 aktuelle Energie(log) / mittlere Energie
```

Bei diesem Beispiel ergibt sich:

```
            4                     5                     2,75
```

Aufgrund physioakustischer Gesetzmäßigkeiten werden bei diesem Beispiel ferner folgende Mindestbitzahlen für die drei Frequenzgruppen vorgegeben:

```
            5                     3                     1
```

so daß sich ergibt

```
            5                     5                     2,75
```

Da zwei Bit verteilt werden, werden gleichmäßig überall 2/7 Bit abgezogen:
Damit ergibt die Bitzuteilung:

```
          4,71                  4,71                  2,46
```

Da aber andererseits nur ganzzahlige Werte vorkommen können, erhält man:

```
            5                     5                     2
```

Insgesamt wurden bislang folgende Bitzahlen vergeben:

$$5*2 \quad + \quad 5*2 \quad + \quad 2*3 \quad = \quad 26$$

also weniger Bit als insgesamt zur Verfügung stehen (28). Damit müssen noch 2 Bit verteilt werden. Hierzu wird von hohen Frequenzen her getestet, in welcher Frequenzgruppe dies möglich ist. Möglich ist dies erstmals in der 2.FG, so daß man letzt-endlich erhält:

$$1.FG: \quad 5 \text{ Bit}, \qquad 2.FG: \quad 6 \text{ Bit}, \qquad 3.FG: \quad 2 \text{ Bit}$$

Anschließend erfolgt eine lineare Quantisierung. Da beispielsweise in der 1.FG 5 Bit zur Verfügung stehen, erfolgt eine Aufteilung in 16 Stufen + Vorzeichen unter Berücksichtigung der Einhüllenden xfl. Entsprechend wird in den anderen Frequenzgruppen vorgegangen.

Nach Zusammenfügen des Bitstroms erhält man als gesamten Bitstrom:
00011100101101101011011001011101110111011111100111,
insgesamt also 50 Bit.

Bei Überlappung um 2 bei 8 Werten ist die Datenrate also:

50 / 6 = 8.33 Bit/Abtastwert

In der Praxis werden wesentlich größere Blocklängen verwendet, so daß man Datenraten von ca 3,5 Bit/Abtastwert erhält.

Die Decodierung erfolgt entsprechend, so daß auf eine detaillierte Beschreibung an dieser Stelle verzichtet werden kann.

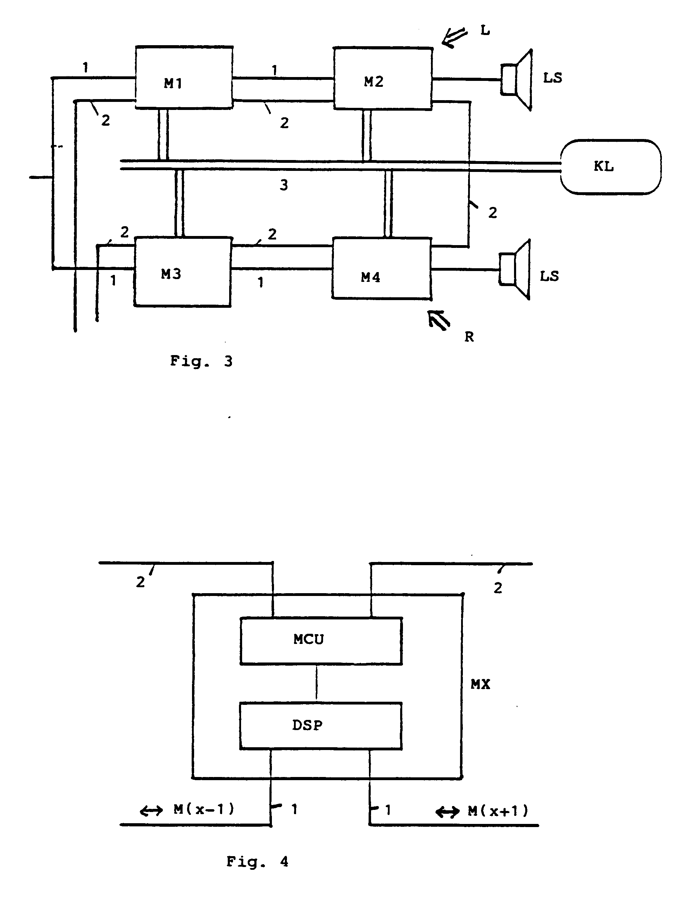

Fig. 3 zeigt ein Multi-Signalprozessorsystem, das ohne Beschränkung des allgemeinen Erfindungsgedankens zur Signalverarbeitung von Audio-Stereo-Signalen ausgelegt ist.

Bei dem dargestellten Ausführungsbeispiel werden die Stereokanäle bereits nach der Signalquelle in einen linken Kanal L und einen rechten Kanal R zerlegt. Jeder Kanal weist digitale Signalverarbeitungsmodule M1, M2 bzw. M3 und M4 auf.

Zur Verbindung der Signalverarbeitungsmodule M1 ... M4 mit dem jeweils benachbarten Modul bzw. der digitalen Signalquelle für den jeweiligen Stereokanal und entsprechenden nachfolgenden Einheiten, wie Lautsprechern LS, ist ein erster Kommunikationskanal 1 vorgesehen. Da der Kommunikationssignal 1 zur Signalverarbeitung in Art einer "Makropipelining" dient, wird der Kommunikationskanal 1 auch als lokaler Kommunikationskanal bezeichnet.

Zusätzlich sind ein langsamer Kommunikationskanal 2 und ein schneller Kommunikationskanal 3 vorgesehen, die jeweils eine globale Verbindung sämtlicher Module M1 ... M4 benötigen.

Fig. 4 zeigt ein Ausführungsbeispiel für eine Realisierung des langsamen Kommunikationskanals 2. Die Module M bestehen aus einem digitalen Signalprozessor DSP und einem Mikrocontroller MCU. Die Mikrocontroller der einzelnen Module sind in Reihe geschaltet. Über ein spezielles Software-Protokoll wird die Verbindung aufgebaut und wieder unterbrochen. Der langsame globale Kommunikationskanal 2 ist damit in Art eines normalen lokalen Netzes aufgebaut, mit dem Unterschied, daß der Pfad dem lokalen System nicht bekannt ist und der Verbindungsaufbau von außen kontrolliert wird, also keine lokale Arbitrierung stattfindet.

Bei dem gezeigten Ausführungsbeispiel wird der langsame Kommunikationskanal 2 für die Systemsteuerung und Parameteradaption verwendet. Der schnelle globale Kommunikationskanal 3 stellt dagegen alle noch benötigten Datenpfade bereit.

Der schnelle Kommunikationskanal wird mittels eines sogenannten Kommunikationscontrollers oder Kommunikationslinkers KL realisiert und hat gegenüber dem langsamen Kommunikationskanal 2 Vorrang.

Die einzelnen Module werden in diesem Fall über einen mikroprozessorähnlichen Bus verbunden. Im Gegensatz zu den bekannten multimasterfähigen Bussen verhalten sich die einzelnen Module weitgehend passiv. Das System wird von dem übergeordneten "Kommunikationslinker" KL kontrolliert. Das System ist deshalb mit einem Master-Slave-System zu vergleichen. Es eröffnet jedoch gegenüber diesen viele neue Möglichkeiten:

Die Verbindungspfade sind nur dem übergeordneten Controller KL bekannt. Der Datenaustausch wird aber von den einzelnen Untermodulen angefordert. Den Verbindungsaufbau übernimmt dann der übergeordnete Controller. Er übernimmt aber nicht die Daten selbst, sondern stellt sie direkt einem anderen Modul oder auch mehreren Modulen zur Verfügung, die entsprechend der Verbindungsstruktur die Daten benötigen. Es sind daher auch 1 auf n Verbindungen möglich. Der Kommunikationscontroller fungiert im wesentlichen nur als Vermittlungsknoten.

Die lokale Datenverwaltung wird von den Untermodulen übernommen. Um die Anforderung an die Übertragungsraten der einzelnen Module gering zu halten, andererseits aber den Kommunikationskanal gut auszulasten, um einen hohen Gesamtdurchsatz zu erreichen, ist eine "Blockmultiplex-übertragung möglich", d.h. es wird der Datenverkehr auf verschiedenen Pfaden quasi gleichzeitig abgewickelt.

Da die Datenpfade nur dem übergeordneten Controller bekannt sind, kann der Datenfluß leicht geändert werden, um eine optimale Anpassung an die Applikation zu gewährleisten.

Die Datenpfadverteilung kann dabei datenabhängig sein, beispielsweise kann eine leichte Adaption an den Fall eines Stereopaars oder zwei getrennte Monokanäle, ein gestörter Kanal etc. erfolgen. Ferner kann die Datenpfadverteilung algorithmusabhängig gestaltet werden. Dies ist beispielsweise dann der Fall, wenn ein Codierverfahren im ersten Durchlauf kein akzeptables Ergebnis gebracht hat und mit veränderten Paramtern neu durchgeführt werden muß.

Darüberhinaus ist eine Umverteilung der Verbindungen nach bestimmten Schemen möglich, z.B. kann eine zyklische Umschaltung erfolgen.

Die Erfindung ist vorstehend anhand eines Ausführungsbeispiels ohne Beschränkung des allgemeinen Erfindungsgedankens beschrieben worden, innerhalb dessen selbstverständlich die verschiedensten Modifikationen möglich sind:

Selbstverständlich ist das beschriebene System nicht auf die Verwendung von zwei in Serie geschalteten Signalverarbeitungsmodulen beschränkt; es können vielmehr so viele Signalverarbeitungsmodule in Reihe oder auch parallel geschaltet werden, wie dies für den einzelnen Einsatzzweck erforderlich ist.

Darüberhinaus ist das System nicht nur zur Verarbeitung digitalisierter Audiosignale, sondern auch zur Verarbeitung beliebiger Datensignale, wie beispielsweise von Radarsignalen etc. verwendbar.

Ferner kann der externe Mikrocontroller MCU auch entfallen, wenn der verwendete digitale Signalprozessor DSP bereits einen langsamen Kommunikationskontroller aufweist, d.h. die benötigten Teile der MCU bereits auf dem DSP-Chip integriert sind.

Weiterhin können die langsamen Kommunikationskanäle in Reihe oder als BUS geschaltet werden.

Es versteht sich von selbst, daß das erfindungsgemäße Multi-Signalprozessorsystem nicht nur zur Echtzeitrealisierung des vorstehend beschriebenen Verfahrens verwendet Werden kann, sondern selbstverständlich auch zur Realisierung anderer Verfahren, beispielsweise des unter der Bezeichnung OCF bekannten Verfahrens, das beispielsweise in alteren PCT-Anmeldung DE87/00384 beschrieben ist.

Bei der Echtzeit-Realisierung dieses Verfahrens, aber auch des vorstehend beschriebenen Verfahrens ist es besonders vorteilhaft, wenn im "worst case", d.h. dann, wenn die zur Codierung benötigte Rechenzeit beispielsweise für den OCF-Algorithmus die Zeitvorgabe bei einer Echtzeitrealisierung übersteigt, der Iterationsvorgang abgebrochen wird.

Hierzu wird ein bestmöglicher Ausgangsdatensatz bereitgestellt, der, da die Annäherung an den optimalen Endzustand asymptotisch erfolgt, dem endgültigen Ergebnis, das man erhalten würde, wenn man im "worst case-Fall", d.h. 100%-Auslastung des digitalen Signalprozessors DSP, beliebige Rechenzeit zulassen würde, sehr nahe kommt.

## Patentansprüche

1. Digitales adaptives Transformationscodierverfahren für die Übertragung und/oder Speicherung von akustischen Signalen und insbesondere von Musiksignalen,
bei dem N Abtastwerte des akustischen Signals in M Spektralkoeffizienten transformiert werden, die nach Aufteilung in Frequenzgruppen quantisiert und codiert werden, wobei zur Beschreibung des Grobverlaufs des Spektrums der quantisierte Maximalwert jeder Frequenzgruppe verwendet wird,
dadurch **gekennzeichnet,** daß allen von der Amplitude des jeweiligen Spektralkoeffizienten abhängigen Werten einer Frequenzgruppe bei der Codierung die gleiche Bitzahl zugeordnet wird, und
daß jeder Frequenzgruppe eine Mindestbitzahl derart, daß unter psychoakustischen Gesichtspunkten das Quantisierungsgeräusch vom Nutzsignal maskiert wird, sowie gegebenenfalls weitere Bits entsprechend dem in dieser Frequenzgruppe auftretenden quantisierten Maximalwert zugeteilt werden.

2. Verfahren nach Anspruch 1,
dadurch **gekennzeichnet,** daß der logarithmische Wert des Maximalwerts jeder Frequenzgruppe linear quantisiert wird.

**3.** Verfahren nach Anspruch 1 oder 2,
dadurch **gekennzeichnet,** daß die Quantisierung durch Multiplikation und Vergleich mit einer abgespeicherten Tabelle erfolgt.

**4.** Verfahren nach einem der Ansprüche 1 bis 3,
dadurch **gekennzeichnet,** daß die N Abtastwerte mittel DFT, DCT oder TDAC in M Spektralwerte transformiert werden.

**5.** Multi-Signalprozessorsystem mit mehreren digitalen Signalverarbeitungsmodulen (M1 ... M4), die das Verfahren nach einem der Ansprüche 1 bis 4 ausführen, die einen Datenstrom, beispielsweise digitalisierte Audiosignale abarbeiten, und mit einem lokalen Kommunikationskanal (1), der den Datenverkehr zwischen benachbarten Modulen (M1...M4) abwickelt,
dadurch **gekennzeichnet,** daß zusätzlich wenigstens ein globaler Kommunikationskanal (2,3) vorhanden ist, über den die Systembeobachtung, -steuerung, Parameteradaption und/oder der globale Datenaustausch erfolgt.

**6.** Multi-Signalprozessorsystem nach Anspruch 5,
dadurch **gekennzeichnet,** daß zwei globale Kommunikationskanäle (2,3) vorhanden sind, von denen ein erster langsamer Kommunikationskanal (2) die Systemsteuerung und die Parameteradaption und ein zweiter schneller Kommunikationskanal (3) den Datenaustausch abwickelt.

**7.** Multi-Signalprozessorsystem nach Anspruch 6,
dadurch **gekennzeichnet,** daß ein Kommunikationscontroller (KL) vorgesehen ist, der den wahlfreien Datenaustausch auf dem schnellen globalen Kommunikationskanal (3) steuert.

**8.** Multi-Signalprozessorsystem nach Anspruch 7,
dadurch **gekennzeichnet,** daß der Kommunikationscontroller (KL) als Vermittlungsknoten arbeitet.

**9.** Multi-Signalprozessorsystem nach Anspruch 7 oder 8,
dadurch **gekennzeichnet,** daß der Kommunikationskontroller (KL) die Datenverteilung auf dem schnellen globalen Kommunikationskanal (3) daten- und/oder algorithmusabhängig steuert.

**10.** Multi-Signalprozessorsystem nach einem der Ansprüche 6 bis 9,
dadurch **gekennzeichnet,** daß der schnelle globale Kommunikationskanal (3) Vorrang gegenüber dem langsamen globalen Kommunikationskanal (2) hat.

**Claims**

**1.** Digital adaptive transform coding process for transmitting and/or storing acoustic signals and music signals in particular, wherein N analysed values of said acoustic signal are transformed into M spectral coefficients which, following a distribution into frequency groups, are quantified and coded, with the quantified maxiumum value of each frequency group being used to define the approximative characteristics of the spectrum,
**characterized** in that in coding the same bit number is assigned to all values of a frequency group, which depend on the amplitude of the respective spectral coefficient, and
that to each frequency group is assigned a minimum bit number such that, from psychoacoustic viewpoints, the quantification noise is masked by the desired signal, while, if necessary, additional bits are assigned in correspondence with this quantified maximum value occurring in this frequency group.

**2.** Process according to Claim 1,
**characterized** in that the logarithmic value of the maximum value of each frequency group is subjected to a linear quantification.

**3.** Process according to Claim 1 or 2,
**characterized** in that the quantification is carried out by multiplication and comparison against a stored tabs.

**4.** Process according to any of Claims 1 to 3,
**characterized** in that said N analyzed values are transformed by means of DFT, DCT or TDAC into M spectral values.

**5.** Multi-signal processor system, comprising several digital signal processing modules (M1 ... M4) which carry out the process according to any of Claims 1 to 4, which execute a data flow, e.g. digitized audio signals, and comprising a local communication channel (1) for handling the data communication between adjacent modules (M1 ... M4),
**characterized** in that at least one additional global communication channel (2, 3) is provided via which system monitoring, control, parameter adaptation and/or the global data exchange are carried out.

**6.** Multi-signal processor system according to Claim 5,
**characterized** in that two global communication channels (2, 3) are provided whereof a first low-speed communication channel (2) handles system control and parameter adaptation while a second high-speed communication channel (3) handles the data exchange.

**7.** Multi-signal processor system according to Claim 6,
**characterized** in that a communication controller (KL) is provided which controls the random data communication on the high-speed global communication channel (3).

**8.** Multi-signal processor system according to Claim 7,
**characterized** in that said communication controller (KL) operates as central communication facility.

**9.** Multi-signal processor system according to Claim 7 or 8,
**characterized** in that said communication controller (KL) controls the data distribution on said high-speed global communication channel (3) in dependence on data and/or an algorithm.

**10.** Multi-signal processor system according to any of Claims 6 to 9,
**characterized** in that said high-speed global communication channel (3) has a higher priority than said low-speed global communication channel (2).

**Revendications**

**1.** Procédé de codage numérique adaptatif par transformées pour la transmission et/ou la mémorisation des signaux acoustiques et en particulier des signaux musicaux,
dans lequel sont transformés' N valeurs explorées dudit signal acoustique dans M coefficients spectraux qui, après un partage dans des groupes de fréquences, sont quantifiés et codés, la valeur quantifiée maximale de chaque groupe de fréquence étant utilisé pour définir la loi approximative du spectre,
**caractérisé** en ce qu'en codage la même nombre de bits est attribué à toues les valeurs d'un groupe de fréquences, qui dépendent de l'amplitude du coefficient spectral respectif, et
en ce qu'un nombre de bits minimal est attribué à chaque groupe de fréquences de façon que, du point de vue psychoacoustiques, le bruit de quantification soit masqué par le signal utile, en attribuant, si nécessaire, des autres bits in correspondance avec la valeur quantifiée maximale qui est présente dans ce groupe de fréquences.

**2.** Procédé selon la revendication 1,
**caractérisé** en ce que la valeur logarithmique de la valeur maximale de chaque groupe de fréquences subit une quantification linéaire.

**3.** Procédé selon la revendication 1 ou 2,
**caractérisé** en ce que la quantification est réalisée par multiplication et comparaison à une table mémorisée.

**4.** Procédé selon une quelconque des revendications 1 à 3,
**caractérisé** en ce que lesdits N valeurs explorées sont transformées dans M valeurs spectrales moyennent la méthode DFT, DCT ou TDAC.

**5.** Système multiproccsseur de signaux, comprenant plusieurs modules de traitement de signaux numériques (M1 ... M4) qui réalisent le procédé son une quelconque des revendications 1 à 4, dans lesquels est exécuté un courant de données, p.e. des audiosignaux numérisés, et comprenant une voie de communication locale (1) qui réalise la communication de données entre des modules voisins (M1 ... M4),
**caractérisé** en ce qu'au moins une voie de communication globale supplémentaire (2, 3) est prévue par laquelle sont faits l'observation du système, le contrôle du système, l'adaptation de paramètres, et/ou la communication de données globale.

**6.** Système multiprocesseur de signaux selon la revendication 5,
**caractérisé** en ce que deux voies de communication globales (2, 3) sont prévues dont une première voie de communication lente (2) assure le contrôle du système et l'adaptation des paramètres pendant qu'une deuxième voie de communication rapide (3) assure la communication de données.

**7.** Système multiprocesseur de signaux selon la revendication 6,
**caractérisé** en ce qu'un contrôleur de communication (KL) est prévu qui commande la communication de données aléatoire sur ladite voie de communication globale rapide (3).

**8.** Système multiprocesseur de signaux selon la revendication 7,
**caractérisé** en ce que ledit contrôleur de communication (KL) fonctionne en tant que centre de communication.

**9.** Système multiprocesseur de signaux selon la revendication 7 ou 8,
**caractérisé** en ce que ledit contrôleur de communication (KL) commande la distribution de données sur ladite voie de communication globale rapide (3) en fonction de données et/ou d'un algorithme.

**10.** Système multiprocesseur de signaux selon la quelconque des revendications 6 à 9,
**caractérisé** en ce que ladite voie de communication globale rapide (3) est prioritaire vis-a-vis ladite voie de communication globale lente (2).

quantisierte
Spektralkoeff.

Fig. 1

Zusatzinformation

Fig. 2

Fig. 3

Fig. 4